# EUROPÄISCHE PATENTANMELDUNG

(11) **EP 4 675 141 A1**
(43) Veröffentlichungstag der Anmeldung: **07.01.2026**
(21) Anmeldenummer: 25187095.2
(22) Anmeldetag: 03.07.2025
(51) Int. Cl.: F16L 5/04

(54) **WANDDURCHFÜHRUNG ZUR DURCHFÜHRUNG VON LEITUNGEN DURCH EINE WAND**

(30) Priorität: 04.07.2024 DE 202024001275 U
(71) Anmelder: Rieck, Markus, 96117 Memmelsdorf (DE)
(72) Erfinder: Rieck, Markus, 96117 Memmelsdorf (DE)
(74) Vertreter: Findeisen Neumann Scheit Partnerschaft mbB

(57) **Zusammenfassung**

Die Erfindung betrifft eine Wanddurchführung zur Durchführung von Leitungen durch eine Bohrung in einer Wand. Aufgabe der Erfindung ist es insbesondere, dass eine Wanddurchführung für eine runde Bohrung geschaffen wird, bei der die Bohrungsachse entweder senkrecht zu den Wandoberflächen liegt oder aber sich die Bohrungsachse in einem Winkel schräg und in beliebiger Richtung zur Wandoberfläche befindet. Diese Aufgabe wird dadurch gelöst, dass eine innere Zwischenscheibe und eine innere Innenhülse 7 der Wanddurchführung über Gelenke 10 mit zueinander fluchtenden Gelenkachsen 11 verbunden sind und/oder eine äußere Zwischenscheibe 9b und eine äußere Innenhülse 27 der Wanddurchführung über Gelenke 10 mit zueinander fluchtenden Gelenkachsen 11 verbunden sind.

## Beschreibung

Die Erfindung betrifft eine Wanddurchführung zur Durchführung von Leitungen durch eine Bohrung in einer Wand (Gebäudewand). Bei den Leitungen kann es sich um medienführende Leitungen wie beispielsweise um starre oder flexible flüssigkeitsführende oder gasführende Rohre oder Schläuche, oder aber auch um Stromkabel oder elektrische Steuerleitungen oder Glasfaserkabel handeln. Die Gebäudewand schließt typischerweise das Gebäude nach außen ab, so dass es eine Innenseite und eine Außenseite gibt. Die Oberflächen an der Innenseite der Gebäudewand und an der Außenseite der Gebäudewand können vertikal oder geneigt sein.

Wanddurchführungen sind bekannt in der typischen Bauart, dass über ein- oder auszubauende Zwischenstücke oder Teleskopelemente eine Anpassung an verschiedene Wandstärken vorgenommen werden kann. Eine flexible Anpassung an Bohrungen, die nicht gerade, sondern schräg durch eine Wand gehen, ist allerdings nicht Stand der Technik. Daneben geschieht bei Wanddurchführungen nach dem Stand der Technik die Abdichtung der Wandoberfläche an der Außenseite nur durch ein elastisches Dichtelement und der Wasserablauf bei Regen erfolgt an der Wandoberfläche undefiniert. Das führt nach einer gewissen Betriebszeit häufig zu unschönen Wasserspuren unterhalb der Wanddurchführung auf der äußeren Wandoberfläche.

Aufgabe der Wanddurchführung ist es, die Durchführung und Fixierung der Leitungen durch die Wand hindurch dauerhaft sicherzustellen. Eine weitere Anforderung ist die dauerhafte Sicherstellung der Regen- und Winddichtheit, wie sie typischerweise in einschlägigen technischen Regelwerken spezifiziert wird. Alle außen liegenden Teile müssen dauerhaft eine ausreichende Witterungsbeständigkeit beisitzen, insbesondere auch beständig gegen Ozon, Sonneneinstrahlung mit UV-Licht, Regen, Schnee und Hagel. Daneben muss die Wanddurchführung für den Temperaturbereich am Einbauort geeignet sein. Weiterhin soll die Wanddurchführung eine thermische Isolierung darstellen und keine Kältebrücke zwischen der Innen- und der Außenseite der Wand bilden. Weiterhin soll die Wanddurchführung eine schalldämmende Wirkung zwischen Innen- und Außenseite der Wand haben, ähnlich wie die Wand selbst. Die Wanddurchführung soll die Luftdichtheit bis zu einem definierten Druckunterschied zwischen Innen- und Außenseite herstellen, wie sie typischerweise in einschlägigen technischen Regelwerken spezifiziert wird. Zur Installation der Wanddurchführung soll eine runde Bohrung durch die Wand, die als Kernbohrung mit handelsüblichen Bohrgeräten herzustellen ist, genügen. Die Wanddurchführung soll für unterschiedliche Wandstärken und verschiedene Wandmaterialien und Wandaufbauten, also beispielsweise Betonmassivwand, Holzständerwand, gemauerte Ziegelwand aus Hohlblocksteinen, Kalksandsteinwand mit WDVS-System geeignet sein. Die Wanddurchführung soll für eine runde Bohrung durch die Wand geeignet sein, bei denen die Bohrungsachse entweder senkrecht zu den Wandoberflächen liegt oder aber sich die Bohrungsachse in einem Winkel schräg und in beliebiger Richtung zur Wandoberfläche befindet. Die Wanddurchführung soll in der Lage sein, an der Innen- und Außenoberfläche einen bündig anliegenden dichten Wandanschluss auszubilden, auch wenn die Innen- und die Außenoberfläche der Wand nicht parallel oder uneben sind, wie es bei Altbauten häufig der Fall ist. Daneben soll bei Regen der Wasserablauf bei der Wanddurchführung definiert von der außenliegenden Wandoberfläche weg erfolgen, um Spuren von ablaufendem Wasser zu vermeiden.

Diese Aufgabe wird mit einer Wanddurchführung mit den Merkmalen des Anspruchs 1 gelöst. Die erfindungsgemäße Wanddurchführung zur Durchführung von Leitungen durch eine Bohrung in einer Wand weist eine innere Zwischenscheibe mit einer inneren Innenhülse und eine äußere Zwischenscheibe mit einer äußeren Innenhülse auf. Die innere Zwischenscheibe ist an der Wand-Innenseite und die innere Innenhülse ist in einem der Wand-Innenseite zugewandten Endabschnitt der Bohrung angeordnet. Die äußere Zwischenscheibe ist an der Wand-Außenseite und die äußere Innenhülse ist in einem der Wand-Außenseite zugewandten Endabschnitt der Bohrung angeordnet. Die Außendurchmesser der Zwischenscheiben sind größer als der Durchmesser der Bohrung. Weiterhin sind die Zwischenscheiben über mit den Innenhülsen verbundenen Zugelemente axial zur Wand verspannt. Die innere Zwischenscheibe und die innere Innenhülse sowie die äußere Zwischenscheibe und die äußere Innenhülse sind jeweils über Gelenke mit zueinander fluchtenden Gelenkachsen verbunden, sodass bei einer schräg zu den Oberflächen der Wand-Innenseite und der Wand-Außenseite verlaufenden Bohrung die Gelenke so einstellbar sind, dass sich die innere Innenhülse, die äußere Innenhülse und die Zugelemente in der Flucht der Achse der Bohrung befinden, während die Achsrichtungen der Zwischenscheiben lotrecht zur Oberfläche jeweils zugeordneten Wand-Innenseite und Wand-Außenseite sind.

Alternativ wird die Aufgabe für eine einseitige Montage von einer Wand-Innenseite her mit einer Wanddurchführung mit den Merkmalen des Anspruchs 2 gelöst. Diese Alternative der erfindungsgemäßen Wanddurchführung zur Durchführung von Leitungen durch eine Bohrung in einer Wand weist eine innere Zwischenscheibe mit einer inneren Innenhülse auf. Die innere Zwischenscheibe ist an der Wand-Innenseite und die innere Innenhülse ist in einem der Wand-Innenseite zugewandten Endabschnitt der Bohrung angeordnet. Ein Außendurchmesser der Zwischenscheiben ist größer als der Durchmesser der Bohrung. Weiterhin weist die Wanddurchführung eine Abschlussscheibe und Fixierelemente auf. Die Zwischenscheibe und die Fixierelemente werden über mit der Innenhülse verbundene Zugelemente axial zur Wand verspannt. Die Zugelemente sind durch die Abschlussscheibe 28 geführt und enden in den Fixierelementen, wobei die Fixierelemente durch Gewinde an den Zugelementen nach außen über den Durchmesser der Bohrung hinaus schwenkbar und axial in Richtung Wand bewegbar sind, bis diese sich mit der Wand und der Zwischenscheibe verspannen. Die innere Zwischenscheibe und die innere Innenhülse sind über Gelenke mit zueinander fluchtenden Gelenkachsen verbunden, sodass bei einer schräg zu der Oberfläche der Wand-Innenseite verlaufenden Bohrung die Gelenke so einstellbar sind, dass sich die innere Innenhülse und die Zugelemente in der Flucht der Achse der Bohrung befinden, während die Achsrichtung der Zwischenscheibe lotrecht zur Oberfläche der Wand-Innenseite ist.

In einer weiteren Alternative wird die Aufgabe für eine einseitige Montage von einer Wand-Außenseite her mit einer Wanddurchführung mit den Merkmalen des Anspruchs 3 gelöst. Diese Alternative der erfindungsgemäßen Wanddurchführung zur Durchführung von Leitungen durch eine Bohrung in einer Wand weist eine äußere Zwischenscheibe mit einer äußeren Innenhülse auf. Die äußere Zwischenscheibe ist an der Wand-Außenseite und die äußere Innenhülse ist in einem der Wand-Außenseite zugewandten Endabschnitt der Bohrung angeordnet. Ein Außendurchmesser der Zwischenscheibe ist größer als der Durchmesser der Bohrung. Weiterhin weist die Wanddurchführung eine Abschlussscheibe und Fixierelemente auf. Die Zwischenscheibe und die Fixierelemente sind über mit der Innenhülse verbundene Zugelemente axial zur Wand verspannt. Die Zugelemente sind durch die Abschlussscheibe geführt und enden in den Fixierelementen, wobei die Fixierelemente durch Gewinde an den Zugelementen nach außen über den Durchmesser der Bohrung hinaus schwenkbar und axial in Richtung Wand bewegbar sind, bis diese sich mit der Wand und der Zwischenscheibe verspannen. Die äußere Zwischenscheibe und die äußere Innenhülse sind über Gelenke mit zueinander fluchtenden Gelenkachsen verbunden, sodass bei einer schräg zur Oberfläche der Wand-Außenseite verlaufenden Bohrung die Gelenke so einstellbar sind, dass sich die äußere Innenhülse und die Zugelemente in der Flucht der Achse der Bohrung befinden, während die Achsrichtung der Zwischenscheibe lotrecht zur Oberfläche der Wand-Außenseite ist.

Vorteilhafte Ausgestaltungen zu diesen drei Alternativen sind in den Unteransprüchen 4 bis 14 aufgeführt.

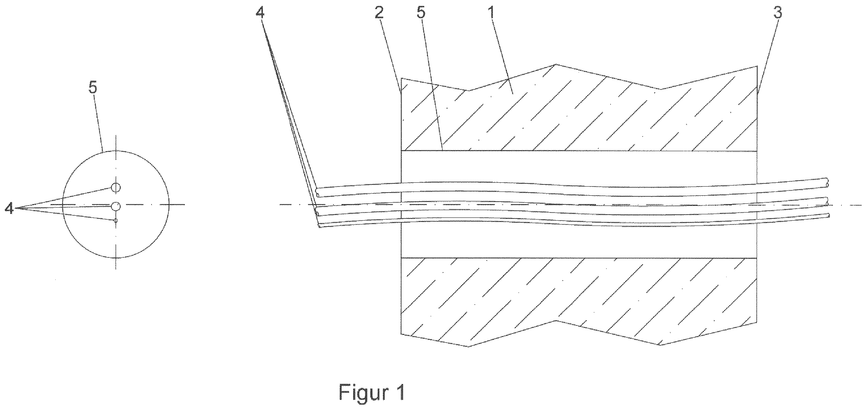

Bauseits gegeben sei eine typischerweise kreisrunde Bohrung 5 in der Wand 1, die die Wand 1 von der Wand-Außenseite 3 bis zur Wand-Innenseite 2 durchdringt, siehe Figur 1 als Schnittdarstellung.

Figur 2 zeigt die erfindungsgemäße Wanddurchführung 6 in der Draufsicht auf die Wand-Außenseite 3 mit den Leitungen 4, der Deckscheibe A 13, den Befestigungselementen 15, einer zweigeteilten Abschlussscheibe 16 und den Rinnen 21 an der Deckscheibe A 13.

Figur 3 zeigt die erfindungsgemäße Wanddurchführung 6 zusammengebaut mit den Leitungen 4 installiert in der Bohrung 5 in der Wand 1, wobei die Wand 1 hier als Schnitt dargestellt ist.

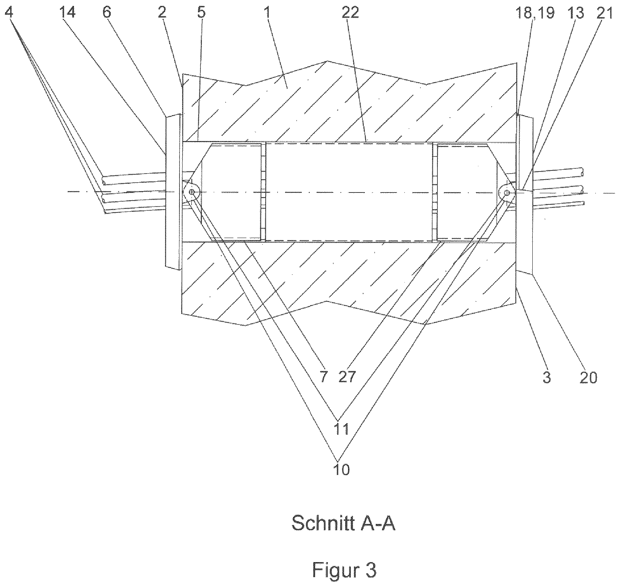

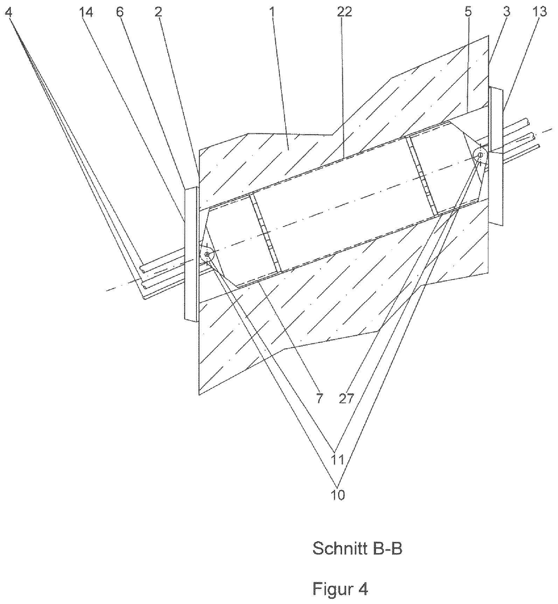

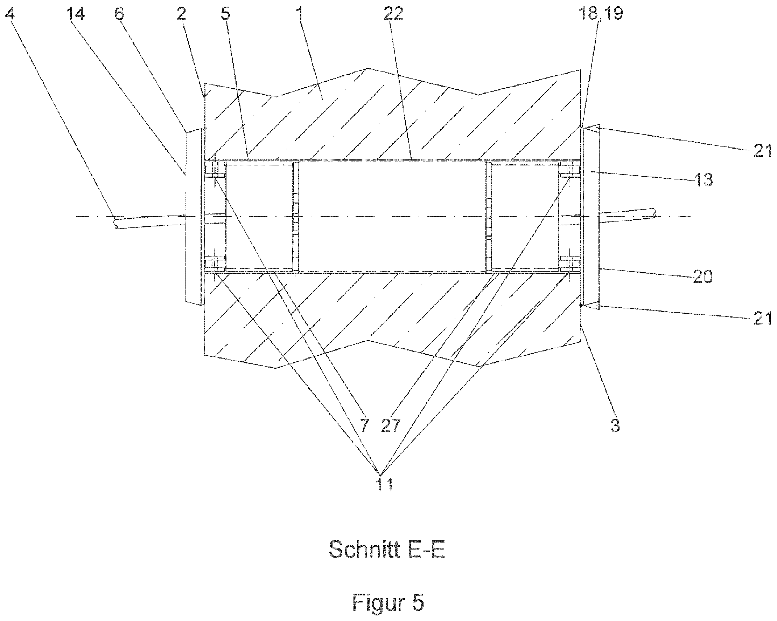

Gemäß Schnittdarstellung in Figur 3 besteht die erfindungsgemäße Wanddurchführung 6 aus zwei in der Bohrung 5 gegenüberliegend angeordneten inneren Innenhülsen 7 und äußeren Innenhülse 27, die über ein oder mehrere Zugelemente 8 miteinander verbunden sind. Die innere Innenhülse 7 ist gelenkig mit einer inneren Zwischenscheibe 9a und die äußere Innenhülse 27 ist gelenkig mit einer äußeren Zwischenscheibe 9b verbunden. In einer bevorzugten erfindungsgemäßen Ausführung wird die Gelenkverbindung gebildet durch zwei Gelenke 10 mit je einer Gelenkachse 11, die in einer Flucht zueinander liegen. Je ein Teil der Gelenke 10 ist mit der inneren Innenhülse 7 bzw. der äußeren Innenhülse 27 verbunden, der andere Teil mit der jeweiligen Zwischenscheibe 9a, 9b, so dass die Zwischenscheibe 9a, 9b um die Gelenkachse 11 stufenlos gegenüber der zugehörigen inneren Innenhülse 7 bzw. der äußeren Innenhülse 27 geschwenkt werden kann, siehe dazu die beiden Schnittansichten E-E in Figur 5 und A-A in Figur 3. Damit können bei einer schrägen Lage der Bohrung 5 in der Wand 1 die innere Innenhülsen 7 und die äußere Innenhülse 27 in passender Achslage zur Bohrung 5 und die Zwischenscheiben 9a, 9b in angepasster Winkellage spaltfrei zur Wand-Innenseite 2 und Wand-Außenseite 3 positioniert werden, siehe Figur 4.

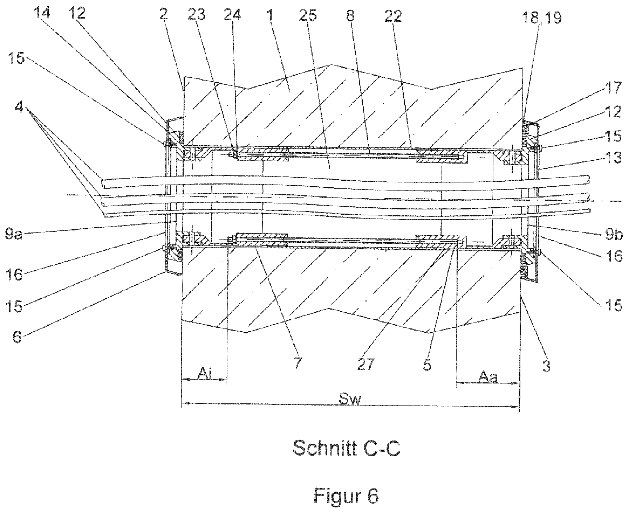

Gemäß Figur 6 besitzen die innere Innenhülse 7 und die äußere Innenhülse 27 mehrere bevorzugt auf einem Teilkreis angeordnete Verbindungsstellen zu den Zugelementen 8. In einer bevorzugten erfindungsgemäßen Ausführung sind die Zugelemente 8 metallische Gewindestangen, die in Innengewinde an den Verbindungsstellen der äußeren Innenhülse 27 direkt eingeschraubt werden und an den Verbindungsstellen der inneren Innenhülse 7 mit Muttern 23 und Unterlegscheiben 24 angezogen werden. Durch die Länge der inneren Innenhülse 7, der äußeren Innenhülse 27 und die Lage der Verbindungsstellen ergibt sich ein Abstand Ai vom Ende der Zugelemente 8 zur Wand-Innenseite 2 und ein Abstand Aa vom anderen Ende der Zugelemente 8 zur Wand-Außenseite 3. Da metallische Gewindestangen eine große Wärmeleitfähigkeit besitzen, vermeiden die Abstände Ai und Aa eine Kältebrücke durch die als metallische Gewindestangen ausgebildeten Zugelemente 8. Zur Anpassung an verschiedene Wandstärken Sw werden die als metallische Gewindestangen ausgebildete Zugelemente 8 bei der Montage abgelängt oder es werden Distanzstücke anstatt oder in Kombination mit Gewindestangen verwendet. Bei der Verwendung von Distanzstücken können zur Verschraubung auch normale Schrauben anstatt von Gewindestangen 8 mit Muttern 23 verwendet werden. Die Zugelemente 8 besitzen in ihrer Ausbildung als Gewindestangen oder in einer anderen Ausbildung eine gewisse Elastizität in Achsrichtung, so dass beim Anziehen eine elastische Vorspannung der Zwischenscheiben 9a, 9b auf der jeweiligen Wand-Innenseite 2 und der Wand-Außenseite 3 erzielt wird, die über die Einsatzdauer des Systems, also in der Regel viele Jahre, erhalten bleibt.

Gemäß Figur 6 enthält die an der Wand-Außenseite 3 angeordnete äußere Zwischenscheibe 9b ein Dichtungssystem, das die Regendichtheit zwischen der Wand-Außenseite 3 und der Wanddurchführung herstellt. In einer bevorzugten Ausführung wird das Dichtungssystem durch eine Nut mit einem darin angeordneten Dichtungsring 12 gebildet, wobei der Dichtungsring 12 in einer bevorzugten Ausführung sich elastisch an die Oberfläche der Wand-Außenseite 3 anlegt. Vor Montage ragt der Dichtungsring 12 über die Innenseite der Zwischenscheibe 9b heraus, bei der Montage wird der Dichtungsring 12 auf ein definiertes Maß zwischen Wand-Außenseite 3 und dem Nutgrund in der Zwischenscheibe 9b verpresst. Der Dichtungsring 12 ist damit dann zwischen einer der Wand-Außenseite 3 zugewandten Seite der äußeren Zwischenscheibe 9b und der Wand-Außenseite 3 ein Dichtungsring 12 angeordnet.

Sowohl innen als auch außen wird auf die innere Zwischenscheibe 9a die Deckscheibe I 14 auf die äußere Zwischenscheibe 9b die Deckscheibe A 13 mit Befestigungselementen 15 befestigt, wobei die jeweilige Deckscheibe I 14 bzw. A 13 und zugehörige Zwischenscheibe 9a, 9b in beliebiger Lage zueinander in Bezug auf die Achse der Bohrung 5 gedreht werden können. In einer bevorzugten Ausführung wird auf den Deckscheiben A 13 und I (14 jeweils geteilte Abschlussscheiben 16 angeordnet, die Deckscheiben A 13 und I 14 haben auf einem Teilkreis angeordnete Langlöcher und durch die Abschlussscheiben 16 und die Langlöcher den Deckscheibe A 13 und I werden die Deckscheiben A 13 und I 14 mit den als Schrauben ausgebildeten Befestigungselementen 15 mit der jeweils zugeordnete Zwischenscheibe 9a, 9b verschraubt. Die als Schrauben ausgebildete Befestigungselemente 15 können selbstschneidend direkt in Bohrungen im Material der Zwischenscheibe geschraubt werden oder sie werden in vorgeschnittene bzw. vorgeformte Gewinde in der Zwischenscheibe 9a, 9b geschraubt oder die Zwischenscheibe 9a, 9b enthält eingesetzte Gewindeelemente, wie beispielsweise Einpressmuttern oder Spritzguss-Gewindeeinsätze, in die die Schrauben geschraubt werden. Die Abschlussscheiben 16 können zur Durchführung von Leitungen 4 auch handelsübliche Kabelverschraubungen enthalten, die jeweilige Leitung 4, di durch die zugehörige Kabelverschraubung geht, abdichten und auch eine Zugentlastung bieten.

An der Innenseite der Deckscheiben A 13 und I 14 kann ein Dichtsystem angeordnet sein. In einer bevorzugten Ausführung wird das Dichtsystem in den Deckscheiben A 13 und I 14 durch eine Nut mit einem darin angeordnetem Dichtungsring 17 gebildet, wobei der Dichtring 17 sich elastisch an die Wandoberfläche anlegt. Vor Montage ragt der Dichtungsring 17 über die Innenseite der jeweiligen Deckscheibe A 13 bzw. I 14 heraus, bei der Montage wird der Dichtungsring 17 auf ein definiertes Maß verpresst. Der Dichtungsring 17 ist damit zwischen einer der Wand-Außenseite 3 zugewandten Seite der Deckscheibe A 13 und der Wand-Außenseite 3 ein Dichtungsring 17 angeordnet.

Gemäß Figur 3 und Figur 5 besitzt in einer bevorzugten erfindungsgemäßen Ausführung die Deckscheibe A 13 überwiegend an der oberen Hälfte eine nach oben offene Nut 18 zur Wand-Außenseite 3, in das als weitere Dichtung eine Pastendichtung 19 nach der Montage eingebracht werden kann. Die Pastendichtung 19 kann auch die Nut 18 vollständig ausfüllen und eine Kehlnaht zur Wand-Außenseite 3 bilden.

In einer bevorzugten erfindungsgemäßen Ausführung besitzt die Deckscheibe A 13 im überwiegend unteren Teil eine von der Wandoberfläche abstehende Abtropfkante 20, die das Abtropen von Regenwasser vor der Wand-Außenseite 3 ermöglicht und das Ablaufen von Regenwasser an der Wand-Außenseite 3 mit der damit verbundenen unschönen Wasserspurenbildung verhindert.

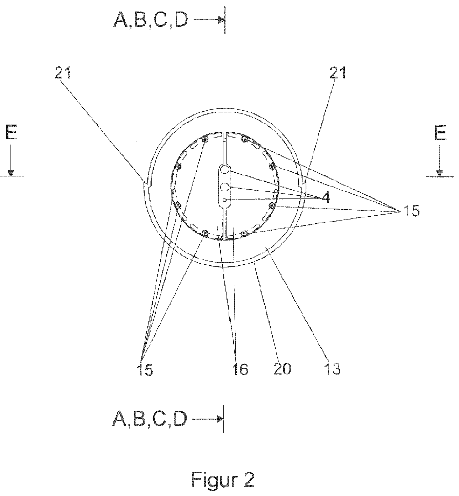

Besitzt die Deckscheibe A 13 sowohl eine Nut 18 mit Pastendichtung 19 im oberen Teil und eine Abtropfkante 20 im unteren Teil, so ist in einer erfindungsgemäßen Ausführung der Übergang am Rand der Deckscheibe A 13 von der Nut 18 mit der Pastendichtung 19 zur Abtropfkante 20 als eine Rinne 21 ausgebildet, so dass Regenwasser an die Abtropfkante 20 geleitet wird, siehe Figur 2, Figur 3 und Figur 5.

In einer bevorzugten Ausführung gibt es eine Trennhülse 22 gemäß Figur 6, Figur 7 und Figur 10. Die Trennhülse wird vor der Montage der Wanddurchführung 6 als separates Element in die Bohrung 5 eingesetzt und bildet die Trennung zwischen dem Isoliermaterial 25 und der Zylinderfläche der Bohrung 5. Dies ist insbesondere bei inhomogenen Wandaufbauten wie beispielsweise einer Holzständerwand von Vorteil, damit das Isoliermaterial 25 nicht unkontrolliert in den Wandaufbau gelangt. Die Trennhülse 22 besteht in einer bevorzugten Ausführung aus einem längsgeschlitzten Kunststoffzylinder, bei dem sich die Enden nicht Stoß auf Stoß befinden, sondern überlappen. Nach der Montage liegt die als längsgeschlitzter Kunststoffzylinder ausgeführte Trennhülse 22 aufgrund Ihrer Eigenelastizität federnd an der Innenseite der Bohrung 5 an.

Zur thermischen Isolierung, zur Reduzierung der Schallübertragung durch die Wanddurchführung 6 hindurch und zur weiteren Abdichtung wird der verbleibenden Innenraum in der Bohrung 5 bzw. in der Trennhülse 22, in der inneren Innenhülsen 7 und in der äußeren Innenhülse 27 mit Isoliermaterial 25 gefüllt, siehe Figur 6, Figur 7 und Figur 10. In einer bevorzugten erfindungsgemäßen Ausführung handelt es sich beim Isoliermaterial 25 überwiegend um Isolierschaum, der im Zuge der Montage der Wanddurchführung 6 eingebracht wird und der an den Zwischenscheiben 9a, 9b durch elastische Formstücke begrenzt wird, wobei die elastischen Formstücke die Leitungen 4 umschließen. In einer anderen bevorzugten erfindungsgemäßen Ausführung handelt es sich beim Isoliermaterial 25 um loses Dämmmaterial, das eingeblasen oder von Hand gestopft wird, wobei das Stopfmaterial aus nichtbrennbarer Steinwolle bestehen kann. In einer anderen bevorzugten Ausführung besteht das Isoliermaterial 25 aus einem oder mehreren elastischen Formstücken aus Schaumstoff oder Mineralwolle.

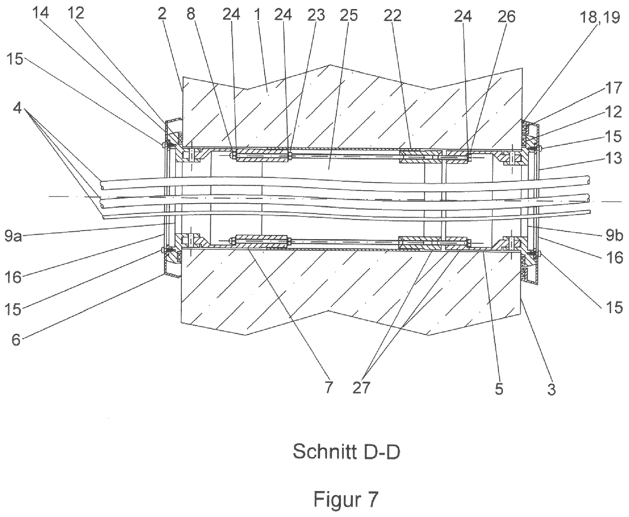

Figur 7 zeigt eine weitere bevorzugte erfindungsgemäße Ausführung, bei der die äußere Innenhülse 27 axial zweigeteilt ausgeführt ist, wobei die beiden Teile über auf einem Teilkreis angeordneten Verbindungselemente, bevorzugt Schrauben 26 verbunden werden. Die innere Innenhülse 7 ist mit der äußeren Innenhülse 27 über Zugelemente 8 verbunden, die in einer bevorzugten Ausführung einen formschlüssigen Antrieb auf der Seite der inneren Innenhülse 7 besitzten, durch auf einem Teilkreis angeordneten Bohrungen in der inneren Innenhülse 7 gehen, axial durch Muttern 23 mit Scheiben 24 gesichert sind und in die äußere Innenhülse 27 geschraubt werden.

### Radial offene Ausführung für bereits durch die Bohrung gezogene Leitungen

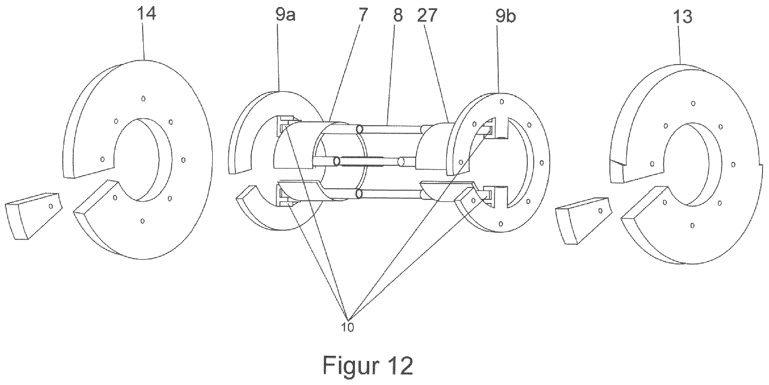

Für Fälle, bei denen die Leitungen 4 schon durch die Bohrung 5 in der Wand 1 durchgeführt wurden, bevor die Wanddurchführung 6 installiert wird, gibt es eine erfindungsgemäße Ausführung der Wanddurchführung 6, bei der abweichend zur zuvor beschriebenen Ausführung die innere Innenhülse 7, die äußere Innenhülse 27, die innere Zwischenscheiben 9a, die äußere Zwischenscheibe 9b, der Dichtungsringe 12, die Deckscheiben A 13 und I 14, der Dichtring 17 und die Abschlussscheibe 16 keine geschlossene Ringform haben, sondern so ausgebildet sind, dass ein radiales Einführen der Leitungen 4 möglich ist. Dies ist in Figur 12 dargestellt. Figur 12 zeigt eine erfindungsgemäße Ausführung, bei der die innere Innenhülse 7, die äußere Innenhülse 27, die innere Zwischenscheibe 9a und die äußere Zwischenscheiben 9b eine radial offene C-förmige Bauform haben. Die Deckscheiben A 13 und 114 haben ein herausnehmbares Segment, das nach der Montage der Wanddurchführung 6 eingesetzt und fixiert wird, wobei die Fixierung durch eine Schraubverbindung realisiert werden kann.

In einer bevorzugten erfindungesgemäßen Ausführung stellt dabei die Innenhülse 7 keinen geschlossenen geometrischen Zylinder dar, sondern eine C-Form.

In einer bevorzugten erfindungesgemäßen Ausführung stellt dabei die Zwischenscheibe 9a, 9b keinen geschlossenen geometrischen Ring dar, sondern besteht entweder aus zwei in etwa gleich großen Teilen oder aus einem Ring mit einer Öffnung und einem einsetzbaren Segment oder sie besteht aus mehreren Teilen oder sie besitzt eine Trennstelle und kann elastisch federnd geöffnet und wieder geschlossen werden.

In einer bevorzugten erfindungesgemäßen Ausführung stellt dabei der Dichtungsring 12 keinen geschlossenen geometrischen Zylinder dar, sondern besteht entweder aus zwei oder mehreren Teilen oder er besitzt eine Trennstelle.

In einer bevorzugten erfindungesgemäßen Ausführung stellen dabei die Deckscheiben A 13 und I 14 keine geschlossenen geometrischen Ringe dar, sondern bestehen entweder aus zwei in etwa gleich großen Teilen oder aus einem Ring mit einer Öffnung und einem einsetzbaren Segment oder sie besteht aus mehreren Teilen oder sie besitzt eine Trennstelle und kann elastisch federnd geöffnet und wieder geschlossen werden.

In einer bevorzugten erfindungesgemäßen Ausführung stellt dabei die Innenhülse 7 keinen geschlossenen geometrischen Zylinder dar, sondern eine C-Form.

In einer bevorzugten erfindungesgemäßen Ausführung stellt dabei die Innenhülse 7 keinen geschlossenen geometrischen Zylinder dar, sondern eine C-Form.

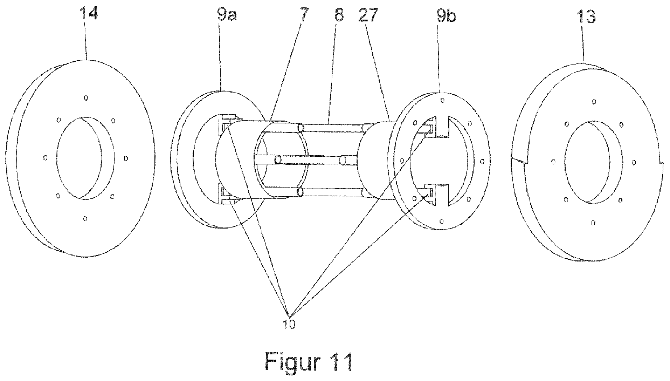

Demgegenüber zeigt Figur 11 perspektivisch die Hauptkomponenten bei einer Ausführung der erfindungsgemäßen Wanddurchführung 6 mit geschlossener Ringform, bei der die Leitungen 4 durch die Wanddurchführung 6 hindurch gefädelt werden müssen.

### Ausführung für einseitige Montage

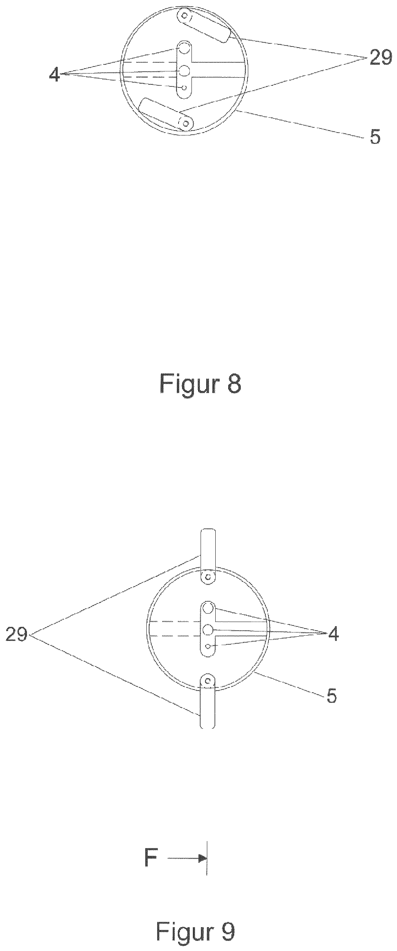

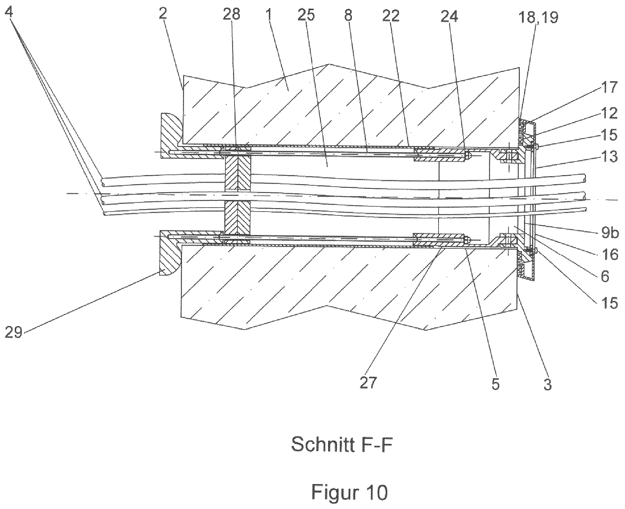

Figur 8 zeigt in der Draufsicht auf die Wand-Innenseite 2 eine erfindungsgemäße Ausführung ohne innere Innenhülse 7 und ohne Deckscheibe I 14. Dagegen ist die erfindungsgemäße Ausführung nach Figur 8 mit einer Endscheibe 28 und zwei Fixierelementen 29 ausgestattet. Figur 8 zeigt die Position der Fixierelemente 29 vor der Montage, in der die Wanddurchführung 6 von der Wand-Außenseite 3 aus montiert werden kann, ohne dass der Monteur zur Wand-Innenseite 2 gehen muss oder eine zweite Person an der Wand-Innenseite 2 benötigt. Vor der Montage kann eine Trennhülse 22 in die Bohrung 5 der Wand 1 gesetzt werden, gemäß Figur 10. Zur Montage wird die ohne Deckscheibe A 13 vormontierte Wanddurchführung 6 soweit in die Bohrung 5 der Wand 1 geschoben, bis die äußere Zwischenscheibe 9b an der Wand-Außenseite 3 anliegt. Auch hier kann die Zwischenscheibe 9b um die Gelenkachse 11 stufenlos gegenüber der äußeren Innenhülse 27 geschwenkt werden, da auch hier die äußere Zwischenscheibe 9b und die äußere Innenhülse 27 über Gelenke mit zueinander fluchtenden Gelenkachsen verbunden sind. Damit kann auch hier bei einer schrägen Lage der Bohrung 5 in der Wand 1 die äußere Innenhülse 27 in passender Achslage zur Bohrung 5 und die Zwischenscheiben 9b in angepasster Winkellage spaltfrei zur Wand-Außenseite 3 positioniert werden.

Die Zugelemente 8 besitzen formschlüssige Antriebselemente auf der Außenseite, bevorzugt Außensechskant, Innensechskant oder Torx. Die Fixierelemente 29 besitzen ein Innengewinde, das in das Außengewinde der Zugelemente 8 greift. Zunächst sind die Fixierelemente 29 eingeschwenkt gemäß Figur 8. Die Wanddurchführung 6 wird damit von der Wand-Außenseite 3 aus in die Bohrung 5 gesetzt. Dann werden die Zugelemente 8 über die Antriebselemente mit einem geeigneten Werkzeug von der Wand-Außenseite 3 aus in Rotation versetzt. Dadurch werden die Fixierelemente 29 auf der Wand-Innenseite 2 radial nach außen in ihre Endlage geschwenkt, wie in Figur 9 gezeigt. Durch einen Anschlag an der Endscheibe 28 wird ein weiteres Schwenken der Fixierelemente 29 verhindert. Beim weiteren Drehen der Zugelemente 8 über die Antriebselemente werden die Fixierelemente 29 über den durch ihr Innengewinde und das Außengewinde der Zugelemente gebildeten Gewindetrieb axial in Richtung Wand-Außenseite 3 bewegt. Damit werden die Fixierelemente 29, die Wand 1 und die äußere Zwischenscheibe 9b an der Wand-Außenseite 3 axial gegeneinander verspannt. Die Fixierelemente 29 liegen dabei dann an der Wand-Innenseite 2 an.

Die Endscheibe 28 besteht in einer bevorzugten erfindungsgemäßen Ausführung aus zwei axial hintereinander angeordneten Teilen, deren Schlitz zum Einführen der Leitungen 4 in der Endlage um 180° verdreht sind, siehe Figur 9. Damit wird eine gute Dichtheit gegen Austritt von Isolierschaum auf der Wand-Innenseite 2 erreicht, wenn von der Wand-Außenseite 3 aus Isolierschaum als Isoliermaterial 25 eingebracht wird.

Als nächster Montageschritt wird das Isoliermaterial 25 eingebracht. Als letzter Montageschritt werden die Deckscheibe A 13 mit Dichtring 17, Pastendichtung 19, Abschlussscheibe 16 und den Befestigungselementen 15 montiert. Die fertig montierte Wanddurchführung 6 ist in der Schnittdarstellung in Figur 10 gezeigt.

In einer nicht dargestellten Ausführung ist es natürlich grundsätzlich auch möglich, dass eine einseitige Montage von der Wand-Innenseite 2 möglich ist. Abweichend zur zuvor beschriebenen Ausführung würde die Wanddurchführung 6 dann anstelle der äußeren Innenhülse 27, der äußeren Zwischenscheibe 9b und der Deckscheibe A 13 die innere Innenhülse 7, die innere Zwischenscheibe 9a und die Deckscheibe I 14 aufweisen. Die Fixierelemente 29 würden im verspannten Zustand der Wanddurchführung 6 dann entsprechend an der Wand-Außenseite 3 anliegen.

### Bezugszeichenliste

1 Wand
2 Wand-Innenseite
3 Wand-Außenseite
4 Leitung
5 Bohrung
6 Wanddurchführung
7 Innere Innenhülse
8 Zugelemente
9a innere Zwischenscheibe
9b äußere Zwischenscheibe
10 Gelenk
11 Gelenkachse
12 Dichtungsring
13 Deckscheibe A
14 Deckscheibe I
15 Befestigungslemente
16 Abschlussscheibe
17 Dichtring
18 Nut
19 Pastendichtung
20 Abtropfkante
21 Rinne
22 Trennhülse
23 Mutter
24 Unterlegscheibe
25 Isoliermaterial
26 Schraube
27 Äußere Innenhülse
28 Endscheibe
29 Fixierelemente

## Patentansprüche

1. Wanddurchführung zur Durchführung von Leitungen durch eine Bohrung 5 in einer Wand, wobei die Wand eine Wand-Innenseite 2 und eine Wand-Außenseite 3 aufweist,
**dadurch gekennzeichnet,**
**dass** die Wanddurchführung eine innere Zwischenscheibe 9a mit einer inneren Innenhülse 7 und eine äußere Zwischenscheibe 9b mit einer äußeren Innenhülse 27 aufweist und dass die innere Zwischenscheibe 9a an der Wand-Innenseite 2 und die innere Innenhülse 7 in einem der Wand-Innenseite 2 zugewandten Endabschnitt der Bohrung 5 angeordnet ist und dass die äußere Zwischenscheibe 9b an der Wand-Außenseite 3 und die äußere Innenhülse 27 in einem der Wand-Außenseite 3 zugewandten Endabschnitt der Bohrung 5 angeordnet ist und dass die Außendurchmesser der Zwischenscheiben 9a, 9b größer sind als der Durchmesser der Bohrung 5 und dass die Zwischenscheiben 9a, 9b über mit den Innenhülsen 7 und 27 verbundene Zugelemente 8 axial zur Wand 1 verspannt sind und dass die innere Zwischenscheibe 9a und die innere Innenhülse 7 sowie die äußere Zwischenscheibe 9b und die äußere Innenhülse 27 jeweils über Gelenke 10 mit zueinander fluchtenden Gelenkachsen 11 verbunden sind, sodass bei einer schräg zu den Oberflächen der Wand-Innenseite 2 und der Wand-Außenseite 3 verlaufenden Bohrung 5 die Gelenke 10 so einstellbar sind, dass sich die innere Innenhülse 7, die äußere Innenhülse 27 und die Zugelemente 8 in der Flucht der Achse der Bohrung 5 befinden, während die Achsrichtungen der Zwischenscheiben 9a, 9b lotrecht zur Oberfläche jeweils zugeordneten Wand-Innenseite 2 und Wand-Außenseite 3 sind.

2. Wanddurchführung zur Durchführung von Leitungen durch eine Bohrung (5) in einer Wand, wobei die Wand eine Wand-Innenseite 2 und eine Wand-Außenseite 3 aufweist,
**dadurch gekennzeichnet,**
**dass** die Wanddurchführung eine innere Zwischenscheibe 9a mit einer inneren Innenhülse 7 aufweist und dass die innere Zwischenscheibe 9a an der Wand-Innenseite 2 und die innere Innenhülse 7 in einem der Wand-Innenseite 2 zugewandten Endabschnitt der Bohrung 5 angeordnet ist und dass ein Außendurchmesser der Zwischenscheiben 9a größer ist als der Durchmesser der Bohrung 5 und die Wanddurchführung weiterhin eine Abschlussscheibe 28 und Fixierelemente 29 aufweist und dass die Zwischenscheibe 9a und die Fixierelemente 29 über mit der Innenhülse 7 verbundene Zugelemente 8 axial zur Wand 1 verspannt werden, wobei die Zugelemente 8 durch die Abschlussscheibe 28 geführt sind und in den Fixierelementen 29 enden und durch Gewinde an den Zugelementen 8 nach außen über den Durchmesser der Bohrung 5 hinaus geschwenkt und axial in Richtung Wand 1 bewegt werden, bis sie sich mit der Wand 1 und der Zwischenscheibe 9a verspannen und dass die innere Zwischenscheibe 9a und die innere Innenhülse 7 über Gelenke 10 mit zueinander fluchtenden Gelenkachsen 11 verbunden sind, sodass bei einer schräg zur Oberfläche der Wand-Innenseite 2 verlaufenden Bohrung 5 die Gelenke 10 so einstellbar sind, dass sich die innere Innenhülse 7 und die Zugelemente 8 in der Flucht der Achse der Bohrung 5 befinden, während die Achsrichtung der Zwischenscheibe 9a lotrecht zur Oberfläche der Wand-Innenseite 2 ist.

3. Wanddurchführung zur Durchführung von Leitungen durch eine Bohrung (5) in einer Wand, wobei die Wand eine Wand-Innenseite 2 und eine Wand-Außenseite 3 aufweist,
**dadurch gekennzeichnet,**
**dass** die Wanddurchführung eine äußere Zwischenscheibe 9b mit einer äußeren Innenhülse 27 aufweist und dass die äußere Zwischenscheibe 9b an der Wand-Außenseite 3 und die äußere Innenhülse 27 in einem der Wand-Außenseite 3 zugewandten Endabschnitt der Bohrung 5 angeordnet ist und dass ein Außendurchmesser der Zwischenscheiben 9b größer ist als der Durchmesser der Bohrung 5 und die Wanddurchführung weiterhin eine Abschlussscheibe 28 und Fixierelemente 29 aufweist und dass die Zwischenscheibe 9b und die Fixierelemente 29 über mit der Innenhülse 27 verbundene Zugelemente 8 axial zur Wand 1 verspannt werden, wobei die Zugelemente 8 durch die Abschlussscheibe 28 geführt sind und in den Fixierelementen 29 enden und durch Gewinde an den Zugelementen 8 nach außen über den Durchmesser der Bohrung 5 hinaus geschwenkt und axial in Richtung Wand 1 bewegt werden, bis sie sich mit der Wand 1 und der Zwischenscheibe 9b verspannen und dass die äußere Zwischenscheibe 9b und die äußere Innenhülse 27 über Gelenke 10 mit zueinander fluchtenden Gelenkachsen 11 verbunden sind, sodass bei einer schräg zur Oberfläche der Wand-Außenseite 3 verlaufenden Bohrung 5 die Gelenke 10 so einstellbar sind, dass sich die äußere Innenhülse 27 und die Zugelemente 8 in der Flucht der Achse der Bohrung 5 befinden, während die Achsrichtung der Zwischenscheibe 9b lotrecht zur Oberfläche der Wand-Außenseite 2 ist.

4. Wanddurchführung nach einem der vorgenannten Ansprüche,
**dadurch gekennzeichnet,**
**dass** zwischen einer der Wand-Innenseite 2 zugewandten Seite der inneren Zwischenscheibe 9a und der Wand-Innenseite 2 ein Dichtungsring 12 angeordnet ist und/oder dass zwischen einer der Wand-Außenseite 3 zugewandten Seite der äußeren Zwischenscheibe 9b und der Wand-Außenseite 3 ein Dichtungsring 12 angeordnet ist.

5. Wanddurchführung nach einem der vorgenannten Ansprüche,
**dadurch gekennzeichnet,**
**dass** an der äußeren Zwischenscheibe 9b eine Deckscheibe A 13 angeordnet ist, die im überwiegend oberen Teil an der Wand-Außenseite 3 eine Nut 18 mit einer Pastendichtung 19 und im überwiegend unteren Teil eine von der Wand-Außenseite 3 abstehende Abtropfkante 20 aufweist, wobei der Übergang vom überwiegend oberen Teil der Deckscheibe A 13 auf den überwiegend unteren Teil der Deckscheibe A 13 durch eine Rinne 21 gestaltet ist, die ablaufendes Wasser vom überwiegend oberen Teil der Deckscheibe A 13 von der Wand-Außenseite 3 weg zur Abtropfkante 20 leitet.

6. Wanddurchführung nach einem der vorgenannten Ansprüche,
**dadurch gekennzeichnet,**
**dass** zwischen einer der Wand-Außenseite 3 zugewandten Seite der Deckscheibe A 13 und der Wand-Außenseite 3 ein Dichtungsring 17 angeordnet ist.

7. Wanddurchführung nach einem der vorgenannten Ansprüche,
**dadurch gekennzeichnet,**
**dass** auf einer der Wand-Innenseite 2 abgewandten Seite der inneren Zwischenscheibe 9a eine Deckscheibe I 14 angeordnet ist und dass die Deckscheiben A 13, I 14 konzentrisch und in Bezug auf die Achse der Bohrung 5 drehbar auf der jeweils zugeordneten Zwischenscheibe 9a, 9b angeordnet ist und dass die Deckscheiben A 13, I 14 mit Befestigungselementen 15 auf der jeweils zugeordneten Zwischenscheibe 9a, 9b befestigt werden.

8. Wanddurchführung nach einem der Ansprüche 5 bis 7
**dadurch gekennzeichnet,**
**dass** an einer der Wand-Außenseite 3 abgewandten Seite der Deckscheiben A 13 eine Abschlussscheibe 16 platziert ist und diese Abschlussscheibe 16 Öffnungen zur Durchführung der Leitungen 4 aufweist und/oder dass an einer der Wand-Innenseite 2 abgewandten Seite der Deckscheiben I 14 eine Abschlussscheibe 16 platziert ist und diese Abschlussscheibe 16 Öffnungen zur Durchführung der Leitungen 4 aufweist.

9. Wanddurchführung nach einem der vorgenannten Ansprüche,
**dadurch gekennzeichnet,**
**dass** die Wanddurchführung 6 eine Trennhülse 22 aufweist, die federnd elastisch oder klebend oder starr an der Zylinderfläche der Bohrung 5 anliegt und damit diese in Teilen oder ganz abdeckt.

10. Wanddurchführung nach einem der vorgenannten Ansprüche,
**dadurch gekennzeichnet,**
**dass** die äußere Innenhülse 27 axial zweigeteilt aufgebaut ist, wobei die Zugelemente 8 in einem Teil der äußeren Innenhülse 27 enden und die beiden Teile der äußeren Innenhülse 27 mit Schrauben 26 und Unterlegscheiben 24 verbunden sind.

11. Wanddurchführung nach einem der vorgenannten Ansprüche,
**dadurch gekennzeichnet,**
**dass** die innere Innenhülse 7 eines oder mehrere Sperrelemente aufweist, die verhindern, dass bei einer Verschraubung der beiden Teile der äußeren Innenhülse 27 von der Wand-Außenseite 3 her die inneren Teile der Wandurchführung 6, also maßgeblich der zweite Teil der äußeren Innenhülse 27, die Zugelemente 8, die innere Innenhülse 7, die Zwischenscheibe 9 und die Deckscheibe I 14 axial nach innen verschoben werden.

12. Wanddurchführung nach einem der vorgenannten Ansprüche,
**dadurch gekennzeichnet,**
**dass** ein verbleibender Innenraum in der Bohrung 5 und/oder in der Trennhülse 22und/oder in der inneren Innenhülsen 7 und/oder in der äußeren Innenhülse 27 mit Isoliermaterial 25 gefüllt ist, wobei das Isoliermatieral 25 die Leitungen 4 umschließt.

13. Wanddurchführung nach Anspruch 12,
**dadurch gekennzeichnet,**
**dass** das Isoliermaterial 25 aus Isolierschaum oder aus losem Dämmmaterial oder aus elastischen Formstücken oder aus einer Kombination daraus besteht.

14. Wanddurchführung nach einem der vorgenannten Ansprüche,
**dadurch gekennzeichnet,**
**dass** die innere Innenhülse 7, die äußere Innenhülse 27, die Zwischenscheiben 9, die äußere Deckscheibe A 13, die innere Deckscheibe I 14, der Dichtring 12 und der Dichtungsring17 in einem Querschnitt senkrecht zur Längsachse der Bohrung 5 einteilig als offenes C-Profil oder radial mehrteilig aufgebaut sind, so dass sich die genannten Teile als montierte Wanddurchführung 6 radial über bereits durch die Bohrung 5 gezogene Leitungen 4 stülpen und sodann in die Bohrung 5 einschieben lässt.
